# EUROPÄISCHE PATENTANMELDUNG

(11) **EP 1 111 348 A2**
(43) Veröffentlichungstag der Anmeldung: **27.06.2001**
(21) Anmeldenummer: 00126939.8
(22) Anmeldetag: 08.12.2000
(51) Int. Cl.: G01F 1/075, G01F 15/14

(54) **Wasserzähler mit Gehäuse aus Kunststoff**

(30) Priorität: 24.12.1999 DE 19963076
(71) Anmelder: SPANNER-POLLUX GmbH, D-67063 Ludwigshafen (DE)
(72) Erfinder: Lang, Gerhard, 67134 Birkenheide (DE)
(74) Vertreter: Patentanwälte Möll und Bitterich

(57) **Zusammenfassung**

Das Gehäuse eines Wasserzählers umfasst ein Gehäuseoberteil (1), ein Gehäuseunterteil (2) und eine Messkammer (10) mit einem Kammermantel (11), einer Kammerdecke (12) und einem Kammerboden (13). Kammermantel (11), Kammerdecke (12) und Gehäuseoberteil (1) und/oder Kammermantel (11), Kammerboden (13) und Gehäuseunterteil (2) sind einstückig aus Kunststoff gespritzt. Der Kammermantel (11) ist von der Gehäusewand beabstandet, so dass ein Zwischenraum (6) entsteht, der mit der Messflüssigkeit, insbesondere der in das Gehäuse (1, 2) einströmenden Messflüssigkeit in Verbindung steht.

## Beschreibung

Die Erfindung betrifft Flüssigkeitszähler, insbesondere Wasserzähler, gemäß dem Oberbegriff des Anspruchs 1.

Wasserzähler, z. B. in Form von Flügelrad- oder Ringkolbenzählem, sind seit über 100 Jahren weltweit in großen Stückzahlen in Gebrauch. Sie besitzen ein Gehäuse aus Metall, meist aus Messingguss. Gemäß der ursprünglichen Praxis wurde nach Ablauf der gesetzlich zulässigen Einsatzdauer der komplette Zähler ausgetauscht. Der gebrauchte Zähler wurde in das Herstellerwerk zurückgeschickt, wo der alte Messeinsatz ausgebaut, das Metallgehäuse gereinigt, ein neuer Messeinsatz eingesetzt, die komplette Einheit justiert und schließlich der Beglaubigungsstempel angebracht wurde. Bei diesem Vorgehen wurde also nicht nur der abgenutzte Messeinsatz, sondern auch das schwere Metallgehäuse transportiert, was erhebliche Gewichts- und Transportkosten verursacht hatte.

Handelsüblich sind inzwischen auch Wasserzähler, bei denen das noch aus Messing bestehende Zählergehäuse- Unterteil mit den beiden Leitungsanschlussstutzen im Netz verbleibt. Das die Messkammer und das Zählwerk aufnehmende Oberteil ist als Kartusche ausgebildet. Diese Kartusche ist mittels Messing- Überwurfmutter wasserdicht, druckfest und manipulationssicher im Zählergehäuse- Unterteil gelagert. Nach Ablauf der gesetzlich zulässigen Einsatzdauer wird nur die alte Kartusche gegen eine neue ausgetauscht. Da alle wesentlichen Teile der Kartusche aus Kunststoff bestehen, der erheblich leichter ist als Metall, und da die aus Metall bestehenden Teile des Zählergehäuses an Ort und Stelle verbleiben können, ergibt sich beim Transport von und zum Herstellerwerk eine erhebliche Gewichts- und Kostenersparnis.

Trotz der hohen Qualität, die bei der Verarbeitung von Kunststoffen erreicht worden war, wurden zunächst nur die die Mess- und Zählerorgane enthaltenden Zählerteile aus Kunststoff hergestellt. Die den Wasserleitungsinnendruck aufnehmenden Zählerteile dagegen wurden und werden nach wie vor aus Metall, bevorzugt Messing, gefertigt. Der Grund hierfür sind zwei grundsätzlich nachteilige Eigenschaften der Kunststoffe gegenüber den Metallen. Der erste Nachteil ist die wesentlich geringere Festigkeit der Kunststoffe, die daher dem Wasserleitungsinnendruck elastisch nachgeben, wodurch sich die Innenmaße der Zählergehäuse merklich verändern, was jedoch wegen des negativen Einflusses auf die Messgenauigkeit nicht tolerierbar ist. Der zweite, wesentlich schwerwiegendere Nachteil ist die unangenehme Eigenschaft der Kunststoffe, unter dem Einfluss von Dauerspannungen zu fließen, d.h. sich plastisch zu verformen. Derartige Dauerspannungen entstehen im Bereich der Verschraubungen, aber auch durch den Wasserleitungsinnendruck.

Aus der US 4 391 139 ist ein Wasserzähler bekannt, dessen druckfestes Gehäuses einschließlich der mit je einem Schraubgewinde versehenen Anschlussstutzen für den Wasserzu- und -ablauf aus Kunststoff hergestellt ist. In das Gehäuseunterteil ist eine zweiteilige, ebenfalls aus Kunststoff hergestellte Messkammer eingesetzt. Der Messkammermantel ist von der Innenwand des Gehäuseunterteils beabstandet; der so gebildete Zwischenraum leitet das einströmende Wasser in die Messkammer. Oberhalb der Messkammer ist ein ebenfalls aus Kunststoff hergestellter druckfester Deckel eingedichtet, wie er bei Trockenläufern üblich ist. Bei der Konstruktion dieses Zählergehäuses wurden das Entformen behindernde Hinterschneidungen vermieden. Die Zahl der für einen kompletten Wasserzähler erforderlichen Einzelteile ist jedoch noch relativ hoch und bedingt einen erheblichen Montageaufwand.

Die DE 196 01 072 offenbart ein Wasserzulaufgefäß mit einem wenigstens teilweise integrierten Durchflussmesser zur Verwendung mit Geschirrspül- oder Waschmaschinen. Dank der Integration ist die Anzahl der notwendigen Bauteile verringert und der Montageaufwand vermindert. Auch wird der Aufwand für die Messung der Dichtigkeit reduziert. Auf eine Maßhaltigkeit des Kunststoffgehäuses muss jedoch nicht geachtet werden, weil der Durchflussmesser nicht geeicht sein muss.

Die DE-OS 25 07 121 beschreibt einen Wasserzähler, bestehend aus einem Kunststoffgehäuse mit Anschlussstutzen für den Wasserzu- und -ablauf und offenem Boden, einer von unten in das Kunststoffgehäuse eingesetzten und eingedichteten druckfesten Messpatrone und einem in die Bodenöffnung des Kunststoffgehäuses eingeschraubten, gegen einen Festanschlag gepressten Gewindering, der die Messpatrone fixiert. Bei der Konstruktion dieses Wasserzählers wurden jedoch die beiden oben beschriebenen nachteiligen Eigenschaften der Kunststoffe, insbesondere die plastische Verformung unter dem Einfluss von Dauerspannungen, nicht beachtet, so dass die Messgenauigkeit dieses Zählers nicht den eichrechtlichen Vorschriften genügen konnte.

Der vorliegenden Erfindung liegt daher die Aufgabe zugrunde, einen Flüssigkeitszähler, insbesondere Wasserzähler, anzugeben, bei dem alle Gehäuseteile aus Kunststoff gefertigt sind, ohne dass die Messgenauigkeit oder die Dauerfestigkeit darunter leiden, und der zur Beschleunigung der Montage nur eine minimale Anzahl von Einzelteilen aufweist.

Diese Aufgabe wird gelöst durch einen Flüssigkeitszähler mit den Merkmalen des Anspruchs 1.

Dank der vorliegenden Erfindung besteht der komplette Flüssigkeitszähler aus nur zwei oder drei Teilen, nämlich dem Gehäuseoberteil, dem Gehäuseunterteil und gegebenenfalls dem Boden der Messkammer. Dank der erfindungsgemäßen Flüssigkeitsverteilung wirkt auf die Messkammerwand nur der Differenzdruck zwischen der Zuströmöffnung und der Abströmöffnung, der jedoch durch gesetzliche Vorschriften auf einen Wert kleiner 1 bar bei dem maximal zulässigen Durchfluss begrenzt ist. Die auf die Messkammerwand wirkende Dauerspannung ist daher so minimal, dass es nicht zu einer plastischen Verformung kommen kann. Der absolute Wasserleitungsinnendruck, für den Werte bis z. B. 16 bar zulässig sind, hat keinen Einfluss auf die Maßgenauigkeit der Messkammer, so dass die Messgenauigkeit erhalten bleibt. Der absolute Wasserleitungsinnendruck wird durch entsprechende Dimensionierung der Kunststoff-Gehäuseteile abgefangen.

Der die Messkammer umgebende Zwischenraum kann entweder mit der in das Zählergehäuse einströmenden Messflüssigkeit oder mit der aus dem Zählergehäuse ausströmenden Messflüssigkeit in Verbindung stehen. Die erstgenannte Variante ist vorzuziehen, weil hier der Differenzdruck von außen auf die Messkammer drückt.

Handelt es sich bei dem Flüssigkeitszähler um einen Ringkolbenzähler, so wird mit dem Kammermantel und der Kammerdecke bzw. dem Kammerboden auch die Trennwand der Messkammer einstückig aus Kunststoff gespritzt.

Bei einem Ringkolbenzähler können die Öffnungen, durch die die Messflüssigkeit in die Messkammer einströmt bzw. die Messkammer verlässt, wahlweise in der Kammerdecke, im Kammerboden und/oder im Kammermantel angebracht werden. Die Öffnungen in Boden und Decke sind sichelförmig, die Öffnungen im Kammermantel rechteckförmig. Befinden sich gemäß einer Weiterbildung der Erfindung die Einströmöffnung und die Ausströmöffnung für die Messflüssigkeit im Kammermantel, so ergibt sich eine besonders einfache Gehäusekonstruktion. Insbesondere lässt sich das komplette Gehäuse einschließlich Messkammer aus nur noch zwei Teilen zusammensetzen.

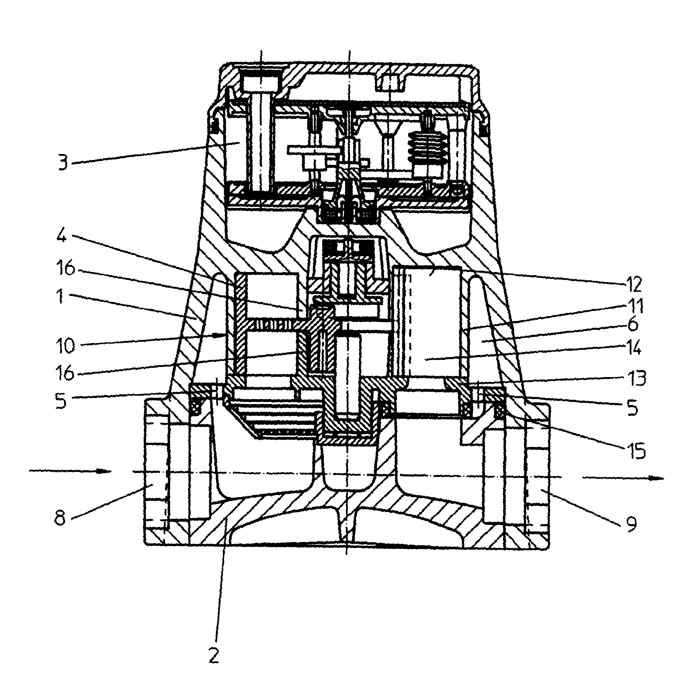

Anhand der Zeichnung soll die Erfindung in Form eines Ausführungsbeispiels näher erläutert werden.

Die Figur zeigt einen Längsschnitt durch einen Ringkolben- Flüssigkeitszähler aus Kunststoff. Das Gehäuse besteht aus einem glockenförmigen Gehäuseoberteil 1 und einem in das Oberteil 1 mit Hilfe eines O- Rings 15 eingedichteten topfförmigen Gehäuseunterteil 2. Im Gehäuseoberteil 1 erkennt man ein Trockenläufer- Zählwerk 3.

Im Gehäuseober- und -unterteil 1, 2 befinden sich fluchtende Stutzen 8, 9, durch die die zu messende Flüssigkeit in das Zählergehäuse eingeführt bzw. aus diesem abgeführt wird.

Im Inneren des Gehäuses 1, 2 befindet sich eine Messkammer 10, bestehend aus einem Messkammermantel 11, einer Messkammerdecke 12 und einem Messkammerboden 13. Im Inneren der Messkammer 10 erkennt man einen Ringkolben 4, dessen oszillierende Bewegung über einen Mitnehmer in eine Rotationsbewegung umgewandelt wird, die mit Hilfe von Permanentmagneten durch die druckfeste Messkammerdecke 12 hindurch auf das Zählwerk 3 übertragen wird.

Die für den Betrieb eines Ringkolbenzählers erforderliche Trennwand 14 und der Innendom 16 sind ebenso wie der Messkammermantel 11 und die Messkammerdecke 12 mit dem Gehäuseoberteil 1 einstückig aus Kunststoff gespritzt.

Wie die Figur zeigt, ist der Messkammermantel 11 von der druckfesten Wand des Gehäuseoberteils 1 beabstandet, wodurch ein zwickelförmiger Zwischenraum 6 entsteht.

Dieser steht über Öffnungen 5 mit dem Flüssigkeitszulauf in Verbindung. Auf den Messkammermantel 11 und den Messkammerboden 13 wirkt somit nur die Druckdifferenz zwischen dem Wasserzulauf und dem Wasserablauf; diese Druckdifferenz ist durch die Eichordnung auf einen maximalen Wert von z. B. 1 bar begrenzt.

Der Vollständigkeit halber sei darauf hingewiesen, dass Messkammermantel 11 und Trennwand 14 nicht nur mit dem Gehäuseoberteil 1 einstückig gespritzt werden können. Es ist durchaus möglich, den Messkammerboden 13, gegebenenfalls auch den Messkammermantel 11, die Trennwand 14 und den Innendom 16, einstückig mit dem Gehäuseunterteil 2 zu spritzen. In jedem Fall erhält man jedoch einen ganz aus Kunststoff gespritzten und nur aus wenigen Einzelteilen bestehenden Flüssigkeitszähler.

## Patentansprüche

1. Flüssigkeitszähler, insbesondere Wasserzähler, im wesentlichen umfassend
- ein Gehäuse mit wenigstens
-- einem Gehäuseoberteil (1)
-- und einem Gehäuseunterteil (2),
- ein Zählwerk (3)
- und eine Messkammer (10) mit
-- einem Kammermantel (11),
-- einer Kammerdecke (12)
-- und einem Kammerboden (13),
- die Messflüssigkeit treibt ein in der Messkammer befindliches Messorgan (4) an, gekennzeichnet durch die Merkmale:
- einstückig aus Kunststoff gespritzt sind
-- Kammermantel (11), Kammerdecke (12) und Gehäuseoberteil (1) oder
-- Kammermantel (11), Kammerboden (13) und Gehäuseunterteil (2),
- der Kammermantel (11) ist von der Gehäusewand unter Ausbildung eines Zwischenraums (6) beabstandet,
- der Zwischenraum (6) steht mit der Messflüssigkeit in Verbindung.

2. Flüssigkeitszähler nach Anspruch 1, gekennzeichnet durch das Merkmal:
- der Zwischenraum (6) hat Verbindung mit der in das Gehäuse (1, 2) einströmenden Messflüssigkeit.

3. Flüssigkeitszähler nach Anspruch 1 oder 2, gekennzeichnet durch die Merkmale:
- der Zähler ist ein Ringkolbenzähler,
- dessen Trennwand (14) und Innendom (16) sind mit Kammermantel (11) und Kammerdecke (12) bzw. Kammerboden (13) einstückig gespritzt.

4. Flüssigkeitszähler nach einem der Ansprüche 1 bis 3, gekennzeichnet durch die Merkmale:
- der Zähler ist ein Ringkolbenzähler,
- im Kammermantel (11) befindet sich
-- eine Einströmöffnung für die Messflüssigkeit
-- oder eine Ausströmöffnung für die Messflüssigkeit.
